(19) Europäisches Patentamt
European Patent Office
Office européen des brevets

(11) **EP 4 596 336 A1**

(12) **EUROPEAN PATENT APPLICATION**

(43) Date of publication:
**06.08.2025 Bulletin 2025/32**

(21) Application number: **25156009.0**

(22) Date of filing: **05.02.2025**

(51) International Patent Classification (IPC):
**B60R 25/30** (2013.01)   **G07C 5/08** (2006.01)
**B60R 25/32** (2013.01)   **B60R 25/34** (2013.01)

(52) Cooperative Patent Classification (CPC):
**G07C 5/085; B60R 25/30;** B60R 25/302;
B60R 25/305; B60R 25/32; B60R 25/34;
G07C 5/0866

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.02.2024 US 202463549958 P**

(71) Applicant: **Cambridge Mobile Telematics Inc.
Cambridge, MA 02142 (US)**

(72) Inventors:
• **GIROD, Lewis David
Cambridge, 02142 (US)**
• **BALAKRISHNAN, Hari
Cambridge, 02142 (US)**

(74) Representative: **Mewburn Ellis LLP
Aurora Building
Counterslip
Bristol BS1 6BX (GB)**

(54) **LOW-POWER TECHNIQUES FOR AUTOMATICALLY DETECTING ANOMALOUS ACTIVITY IN AN UNOCCUPIED VEHICLE**

(57)     Examples described herein can involve operating, by an electronic device, at least one sensor coupled to an unoccupied vehicle to collect sensor data. A vehicle event can be detected based on the sensor data meeting or exceeding an adaptive trigger threshold that is determined based on one or more environmental features associated with an environment of the unoccupied vehicle. Based on detecting the vehicle event, the electronic device can cause a first recording device to record the environment associated with the unoccupied vehicle for a first period of time to generate a first recorded data. The at least one sensor is different from the first recording device. A vehicle event analysis can be performed, by the electronic device, on the first recorded data to determine whether the vehicle event is an incident event.

**FIG. 1**

**Description**

CROSS-REFERENCE TO RELATED APPLICATIONS

This application claims priority to U.S. Provisional Patent Application No. 63/549,958, titled "Low-Power Techniques for Automatically Detecting Anomalous Activity in an Unoccupied Vehicle," filed on February 5, 2024, the entirety of which is hereby incorporated by reference.

TECHNICAL FIELD

This disclosure generally relates to vehicle monitoring, and more particularly, to smart escalation and de-escalation of cameras using lower-power sensors for detecting and escalating incident events in a way that reduces energy consumption.

BACKGROUND OF THE INVENTION

Vehicle break-ins, thefts, vandalism, and damage from natural causes such as a falling tree branch or hail when the vehicle is unoccupied are common in many parts of the world. Until a few years ago, not much could be done to understand what happened or to warn vehicle owners promptly of such an incident. Over the past few years, with the advent of low-cost cameras and other sensors, products are now available to record incidents and inform owners promptly. Such products may also notify owners within seconds or minutes of an incident. However, the fundamental challenge with such products is energy consumption. Continuously recording camera video or images and analyzing this data in real-time drains a vehicle's battery quickly, whether or not a vehicle is powered by a traditional internal combustion engine (ICE) or is an electric vehicle or is a hybrid vehicle. The power consumption of a typical camera system is on the order of 1 Watt (order of magnitude), and when one adds the power consumed by the computation required for object recognition, it increases further. Because a vehicle may be parked for many hours per day and sometimes for many days without being driven continuous video/image recording is untenable.

In addition to the energy challenges, it can be difficult to detect incidents using sensors because of ambient and variable environmental noise as well as adversarial behavior of vandals. A vehicle may be unoccupied in a wide range of environments with different levels of ambient vibration and noise, including in an indoor parking lot where passing cars cause significant vibrations, or in heavy rain, or in an area with many passing heavy vehicles or even trains. Alternatively, the scenario can be adversarial, where a thief may operate stealthily to avoid rocking the vehicle and may even operate knowing how the incident detection system works. For example, they may know the details of the algorithm and its parameters and might rock the vehicle while being hidden from the view of the camera, causing a potential incident that gets suppressed because the thief is hidden, and then quickly enter the vehicle if they believe the incident has been suppressed as a false positive.

Despite the progress made in vehicle monitoring and notifying users of incidents, the goals of optimizing energy consumption while providing for accurate identification of events has not been solved for various reasons, including the need to operate in a challenging, variable-noise, adversarial environment. Thus, there is a need in the art for improved methods and systems related to unoccupied vehicle monitoring by confirming the accuracy of the detected incidents and addressing the appropriate level of response quickly and efficiently without consuming a large amount of energy.

SUMMARY OF THE INVENTION

Examples of the present invention generally relate to vehicle monitoring, and more particularly, to smart escalation and de-escalation of cameras using lower-power sensors for detecting and reporting vehicle events in a way that reduces energy consumption. In some examples, a method is described. The method may include operating, by an electronic device, at least one sensor coupled to an unoccupied vehicle to collect sensor data associated with the unoccupied vehicle. The method may further include detecting, by the electronic device, a vehicle event based on the sensor data meeting or exceeding an adaptive trigger threshold that is determined based on one or more environmental features associated with an environment of the unoccupied vehicle. Based on detecting the vehicle event, the method may further include recording, by the electronic device using a first recording device, the environment associated with the unoccupied vehicle for a first period of time to generate a first recorded data. In some examples, the at least one sensor is different from the first recording device. The method may further include performing, by the electronic device, a vehicle event analysis on the first recorded data to determine whether the vehicle event is an incident event.

In some examples, the vehicle event analysis is a first vehicle event analysis and the method further includes in response to determining that the vehicle event is the incident event, recording, using a second recording device, the environment associated with the unoccupied vehicle for a second period of time to generate a second recorded data, wherein the second period of time is longer than the first period of time. The method further includes performing, by the electronic device, a second vehicle event analysis on the second recorded data to verify whether the vehicle event is a true incident event. Based on verifying that the vehicle event is a true incident event, the method further includes outputting, by the electronic device, an indication of the vehicle event.

In some examples, the method further includes adjusting the adaptive trigger threshold from a first value to a second value based on a change in at least one environment factor associated with the environment of the vehicle. In some examples, the adaptive trigger threshold is a function of a first statistical variance and a second statistical variance of the sensor data, where the first statistical variance is determined based on a subset of the sensor data collected during a first time window, and wherein the second statistical variance is determined based on a second subset of the sensor data collected during a second time window that is longer than the first time window.

In some examples, the sensor data is provided as input to a machine learning model trained by analyzing additional sensor data received from a plurality of sensors positioned in a plurality of environment locations. In these examples, one or more parameters of the adaptive trigger threshold are selected using the machine learning model.

In some examples, the method further includes operating the at least one sensor to collect additional sensor data associated with the unoccupied vehicle and detecting a second vehicle event based on the additional sensor data meeting or exceeding the adaptive trigger threshold. Based on detecting the second vehicle event, the method further includes causing the first recording device to record the environment associated with the unoccupied vehicle for a third period of time to generate a third recorded data and performing the vehicle event analysis on the third recorded data to determine whether the second vehicle event is an incident event. In response to determining that the vehicle event is not an incident event, the method further includes waiting for a delay period and based on detecting a conclusion of the delay period, causing the first recording device to record the environment associated with the unoccupied vehicle for a fourth period of time to generate a fourth recorded data. The method further includes performing the vehicle event analysis on the fourth recorded data to determine whether the second vehicle event is an incident event. In some examples, the delay period is randomized.

In some examples, the at least one sensor comprises at least one of an accelerometer, a gyroscope, a pressure sensor, or any combination thereof.

In some examples, the method further includes determining the one or more environmental features based on contextual data receive from one or more external sources. In some examples, the method further includes determining the one or more environmental features based on the sensor data. In some examples, the method further includes determining the one or more environmental features based on a user input.

Another example of the present disclosure includes a system having at least one sensor, a memory, and a processor coupled to the memory and the at least one sensor. The processor can be configured to operate the at least one sensor coupled to an unoccupied vehicle to collect sensor data associated with the unoccupied vehicle and detect a vehicle event based on the sensor data meeting or exceeding an adaptive trigger threshold that is determined based on one or more environmental features associated with an environment of the unoccupied vehicle. Based on detecting the vehicle event, the processor can further be configured to cause a first recording device to record the environment associated with the unoccupied vehicle for a first period of time to generate a first recorded data. In some examples, the at least one sensor is different from the first recording device. The processor can further be configured to perform a vehicle event analysis on the first recorded data to determine whether the vehicle event is an incident event.

In some examples, and in response to determining that the vehicle event is the incident event, the processor can further be configured to cause a second recording device to record the environment associated with the unoccupied vehicle for a second period of time to generate a second recorded data, wherein the second period of time is longer than the first period of time. The processor can further be configured to perform a second vehicle event analysis on the second recorded data to verify whether the vehicle event is a true incident event and based on verifying that the vehicle event is a true incident event, output an indication of the vehicle event.

In some examples, the processor can further be configured to operate the at least one sensor to collect additional sensor data associated with the unoccupied vehicle and detect a second vehicle event based on the additional sensor data meeting or exceeding the adaptive trigger threshold. Based on detecting the second vehicle event, the processor can further be configured to cause the first recording device to record the environment associated with the unoccupied vehicle for a third period of time to generate a third recorded data and perform the vehicle event analysis on the third recorded data to determine whether the second vehicle event is an incident event. In response to determining that the vehicle event is not an incident event, the processor can be further configured to wait for a delay period and based on detecting a conclusion of the delay period, cause the first recording device to record the environment associated with the unoccupied vehicle for a fourth period of time to generate a fourth recorded data. The processor can further be configured to perform the vehicle event analysis on the fourth recorded data to determine whether the second vehicle event is an incident event.

Still another example of the present disclosure includes a non-transitory computer-readable medium embodying program code that, when executed by a processor, causes the processor to operate the at least one sensor coupled to an unoccupied vehicle to collect sensor data associated with the unoccupied vehicle and detect a vehicle event based on the sensor data meeting or exceeding an adaptive trigger threshold that is determined based on one or more environmental features associated with an environment of the unoccupied vehicle. Based on detecting the vehicle event, the processor can further be configured to cause a first recording device to record the environment associated with the unoccupied vehicle for a first period of time to generate a first recorded data. In some examples, the at least one sensor is different from the first recording device. The processor can further be configured to perform a vehicle event analysis on the first recorded data to determine whether the vehicle event is an incident event.

Numerous benefits are achieved by way of the various examples over conventional techniques. For instance, various examples provide methods and systems that utilize an preliminary detection layer to identify when a possible vehicle event might be occurring using one or more low-power sensors (e.g., an accelerometer, a gyroscope, a motion sensor, , a pressure sensor, etc.), and then trigger a camera recording layer when the preliminary detection layer identifies a possible vehicle event. In some examples, the preliminary detection layer is configured to achieve the highest possible recall (e.g., it may miss almost no genuine events, even if it means having low precision - in other words, it may have a high number of false positives). Then the systems and methods can rely on the camera recording layer to help eliminate the false positives and identify only genuine events. The camera recording layer can consume more power than the preliminary detection layer and, thus, by waiting to initiate the camera recording layer until a possible vehicle event is detected by the preliminary detection layer, the overall power consumption of the device can be reduced.

Various examples described herein can address the abovementioned challenges by providing methods and systems with: (1) high recall, including under adversarial settings where the adversary is aiming to trick the system; and (2) high precision, while reducing energy consumption. For example, the methods and systems discussed herein provide for increased security to the asset (e.g., the unoccupied vehicle) while operating in a way that reduces the power consumption from the car's battery to avoid depleting the battery. Examples that include the middle adjudication layer can improve both precision and recall by operating the preliminary detection layer in a higher recall / lower precision configuration, and by the middle layer adjudicating detections to increase precision, within an acceptable energy budget.

Various other examples and benefits are described herein, including methods, systems, non-transitory computer-readable storage media storing programs, code, or instructions executable by one or more processors and the like. These illustrative examples are mentioned not to limit or define the scope of this disclosure, but rather to provide examples to aid understanding thereof. Illustrative examples are discussed in the Detailed Description, which provides further description. Advantages offered by various examples may be further understood by examining this specification.

BRIEF DESCRIPTION OF THE DRAWINGS

Aspects and features of the various examples are described below with reference to the accompanying drawings, in which:

FIG. 1 is a block diagram illustrating an example of a system employing low-power techniques for automatically detecting interactions with an unoccupied vehicle, according to some aspects of the present disclosure;

FIG. 2 is a block diagram illustrating an example of conceptual layers showing a processing technique implemented by an electronic device, according to aspects of the present disclosure;

FIG. 3 is a block diagram illustrating an example of a system for implementing an preliminary detection layer, according to aspects of the present disclosure;

FIG. 4 is a flowchart of an example of a process for vehicle event detection, according to some aspects of the present disclosure;

FIG. 5 illustrates an example of a process for automatically detecting interactions with an unoccupied vehicle using a low-power system, according to some aspects of the present disclosure; and

FIG. 6 is a plot illustrating an example of a time-varying sample variance, a short term noise estimate, and an adaptive trigger threshold, according to some aspects of the present disclosure.

DETAILED DESCRIPTION

Reference will now be made in detail to various and alternative illustrative examples and to the accompanying drawings. Each example is provided by way of explanation and not as a limitation. It will be apparent to those skilled in the art that modifications and variations may be made. For instance, features illustrated or described as part of one example may be used in another example to yield a still further example. Thus, it is intended that this disclosure includes modifications and variations as come within the scope of the appended claims and their equivalents.

As used herein, the terms "a," "an," and "the" can refer to one or more unless specifically noted otherwise. And the term "or" is not to be construed as identifying mutually exclusive options. For example, the phrase "X contains A or B" can mean that X contains A and not B, X contains B and not A, or X contains both A and B. That is, the term "or" is used to mean "and/or" unless explicitly indicated to refer to alternatives only or the alternatives are mutually exclusive.

Examples of the present invention generally relate to vehicle monitoring, and more particularly, to smart escalation and de-escalation of cameras using lower-power sensors for detecting and reporting vehicle events in a way that reduces energy consumption. Examples described herein can be applied to monitor any suitable type of vehicle, such as a car, a plane or other aircraft, a truck, or a boat. Examples described herein can also be applied to monitor other assets besides a vehicle. For instance, examples described herein can be applied to monitor a storage container left at a location, like a storage pod left in front of a building. Small objects could also be monitored, such as a secure storage container (e.g., a safe or a file cabinet in a home or office). In general, the techniques described herein can be applied to monitor any asset that is in an environment with variable ambient noise/activity, where one is interested in knowing if interaction with the asset is occurring, while suppressing false positives and reducing energy consumption.

While certain examples are described, they are presented as examples only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection. Further details regarding the systems and methods for monitoring interactions with an unoccupied vehicle using low-power techniques are provided below in relation to the figures.

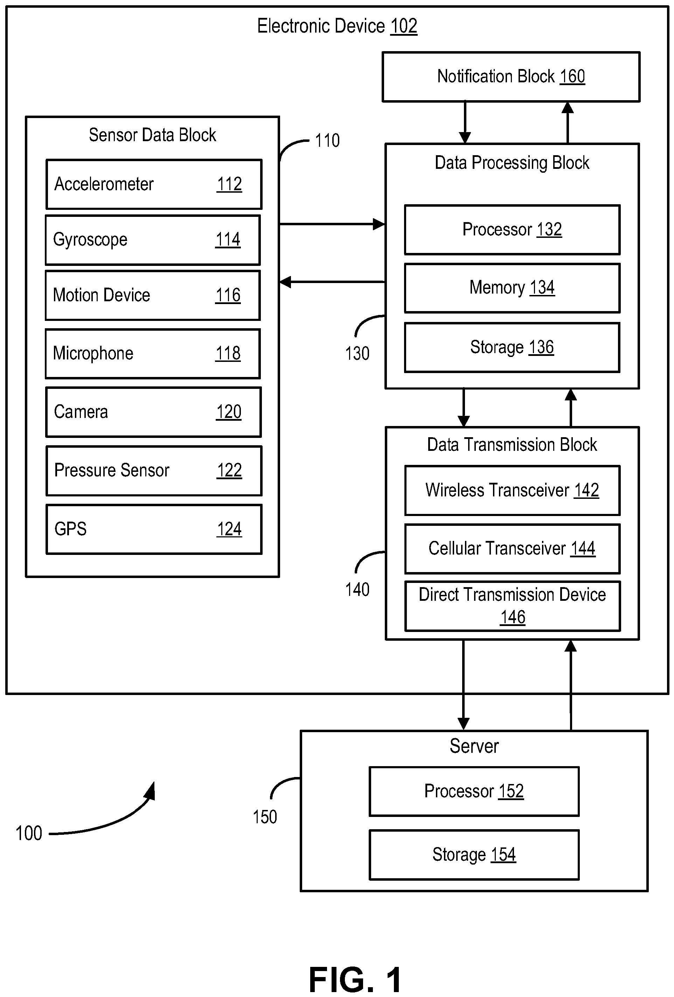

FIG. 1 is a block diagram illustrating an example of an incident detection system employing low-power techniques for automatically detecting interactions with an unoccupied vehicle, according to some aspects of the present disclosure. Incident detection system 100 includes an electronic device 102 which includes a plurality of processing, sensor, and communication resource components. Electronic device 102 can be connected (e.g. physically attached) to an unoccupied vehicle to monitor a status of the vehicle. Electronic device 102 may include a sensor data block 110, a data processing block 130, a data transmission block 140, and a notification block 160. The sensor data block 110 includes data collection sensors as well as the data collected from sensors that are available to electronic device 102. This can include external devices connected via Bluetooth, USB cable, etc. The data processing block 130 may include storage 136 which may store data from the sensors of the sensor data block 110 processed by processor 132. This may include, but is not limited to, analyzing, characterizing, manipulating, smoothing, subsampling, filtering, reformatting, etc. In some examples, the electronic device 102 can be a mobile device. Examples of mobile devices include, but are not limited to, smartphones, tablets, laptops, application specific integrated circuits (ASICs), and the like.

Data transmission block 140 may process communications (e.g., transmitted and received communications), such as the processed sensor data transmitted to an external computing device (e.g., server 150). Data transmission block 140 may include a wireless transceiver 142, cellular transceiver 144, or direct transmission device 146 (e.g., cable) for transmitting and receiving communications. The external computing device may also store and/or process the data obtained from sensor data block 110. Server 150 may include its own processor 152 and storage 154.

Notification block 160 may report the results of an analysis of the sensor data, where the analysis may be conducted by the data processing block 130, to a user of the electronic device 102 via a display (not shown). In some examples, the analysis may be conducted by processor 132 of electronic device 102. In other examples, the analysis may be conducted by the processor 152 of the server 150 and the results can be communicated to the electronic device 102.

Some examples are described where sensor data is collected from an unoccupied vehicle using electronic device 102, and these examples are not limited to any particular sensor device. For example, the sensor devices may include a variety of sensors that can be included within or connected to electronic device 102. Examples of such sensor devices include, but are not limited to, accelerometers 112, gyroscopes 114, motion devices 116, microphones 118, cameras 120, pressure sensors 122 (e.g., a barometer), GPS sensor 124, and the like.

One or more sensors of electronic device 102 (e.g., the sensors of sensor data block 110) may be operated to collect measurements that may be indicative of an event occurring in relation to the vehicle while the vehicle is unoccupied. These events may be referred to as vehicle events. In some examples, the sensor data captured by sensor data block 110 may include measurements of motion and orientation over time of a vehicle in which the sensors are incorporated, such as linear accelerations along one or more axes (X, Y, Z) captured by one or more accelerometers 112, measurements of the rate of rotation around one or more axes captured by one or more gyroscopes 114, changes in pressure inside a cabin or compartment capture by one or more pressure sensors 122, motion detected in an environment around the vehicle captured by one or more motion devices 116 and one or more cameras 120, changes in audio frequency captured by one or more microphones 118, and so on. Because the sensors used to collect data may be components of the electronic device 102, which may be powered by the vehicle's battery and/or an on-board battery, they may draw power from said batteries. To elongate battery life, some examples described herein can apply a specialized technique designed to reduce energy consumption while detecting vehicle events.

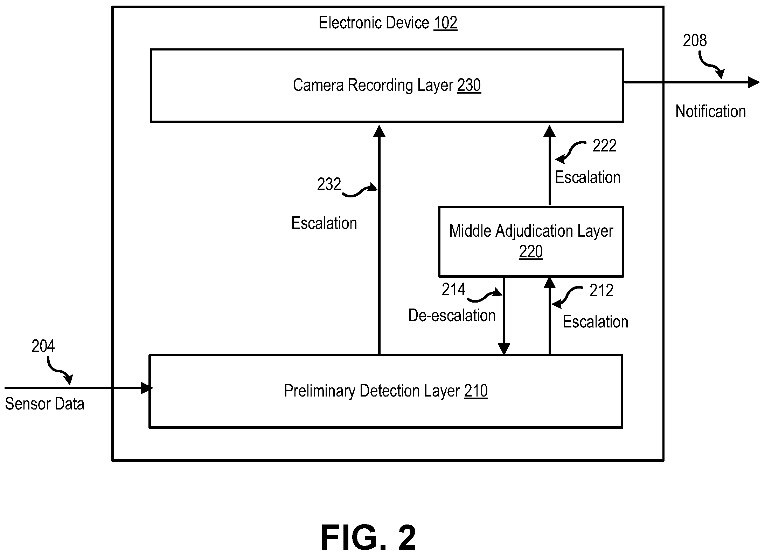

FIG. 2 is a block diagram illustrating an example of conceptual layers showing a processing technique implemented by an electronic device, according to some aspects of the present disclosure. As shown, there can be three conceptual layers for processing sensor data 204. It will be appreciated that these conceptual layers are implemented by the processor, even though they may be described below as performing functions for simplicity.

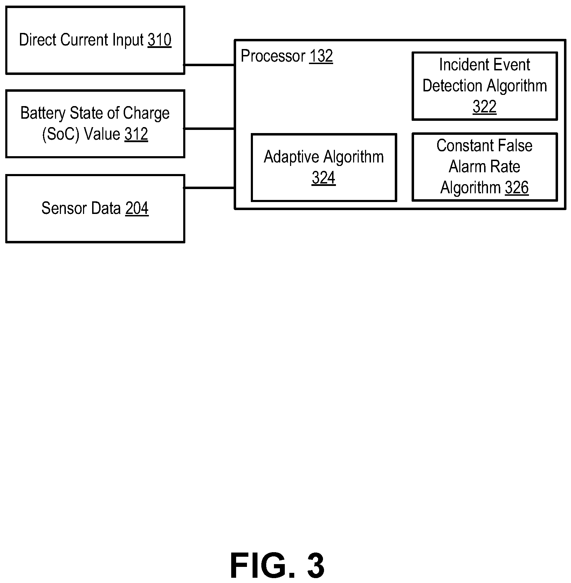

The first layer is preliminary detection layer 210, the second layer is middle adjudication layer 220, and the third layer is camera recording layer 230. At the preliminary detection layer 210, the processor of the electronic device can receive sensor data 204 from the plurality of inertial sensors (e.g., accelerometers and gyroscopes) associated with the electronic device 102. In some examples, the preliminary detection layer 210 can receive sensor data 204 from other sensors such as pressure sensors, motion sensors, GPS sensors, etc. The preliminary detection layer 210 can be low-cost (e.g., in terms of power consumption) to execute and can involve low-power inertial sensors and/or other types of sensors. The processor can analyze the sensor data 204 to correctly identify possible vehicle events with high recall and low precision. Preliminary detection layer 210 is able to adapt to a high degree of noise variability and to adversarial settings within the environment where the sensors are located. The adaptive nature of preliminary detection layer 210 is discussed below in reference to FIG. 3.

The preliminary detection layer 210 has parameters in its operation, which can be tuned to achieve various precision, recall, and energy consumption outcomes. This tuning can be done by analyzing sensor data 204 collected in various settings or environments. Any of several methods can be used to set the parameters, including offline parameter optimization, offline machine learning, or online machine learning. For instance, in some examples, the sensor data 204 may be analyzed to determine key features such as a magnitude and direction of acceleration (e.g., in the case where the sensor comprises one or more accelerometers 112); spikes, drops, and rates of pressure changes (e.g., in the case where the sensor comprises one or more barometers 122); weather associated with an environment of the vehicle (e.g., in the case where the sensor comprises a GPS 126); the geographical location of the vehicle; or any combination of these. Once key features are extracted from the sensor data 204, a machine learning model can receive the key features as input. The machine learning model may be trained to identify the temporal alignment of specific sensor data patterns. For instance, a sudden increase in noise combined with specific acceleration patterns (e.g., vehicle roll or shocks) may indicate a window breaking. As another example, a sudden increase in noise combined with an extraction of weather information indicating a thunderstorm in the area may indicate falling debris.

In some other examples, the processor can employ a constant false alarm rate (CFAR) adaptive algorithm to adapt to noise. The alarms may occur with a statistically constant false alarm rate and each false alarm may use a predictable amount of energy to "adjudicate." Each false alarm may also trigger a follow-up check (e.g., a short time later) to account for noise adaptation. Additionally, the CFAR can be adapted as a function of how much battery is available in the sense that the algorithm is adapted to balance for security of the vehicle against the battery lifespan remaining.

As described in more detail below in reference to FIG. 3, at the preliminary detection layer 210, the processor can analyze sensor data 204 to determine that a vehicle event has occurred. The processor can then compare the sensor data corresponding to the vehicle event to a trigger threshold. In response to determining that the sensor data corresponding to the vehicle event exceeds the trigger threshold, the processor can escalate to the middle adjudication layer 220 or to camera recording layer 230.

The middle adjudication layer 220 can be conceptually positioned between preliminary detection layer 210 and camera recording layer 230. At the middle adjudication layer 220, the processor uses a camera, such as camera 120, to record for a short period of time (e.g., as compared to camera recording layer 230 that may record and analyze many seconds of video). As a result, middle adjudication layer 220 can consume much less energy (e.g., two orders of magnitude less energy) than camera recording layer 230. One of ordinary skill in the art would recognize that the power and energy numbers described herein are to be treated as examples, and it should be understood that these numbers will change as technology evolves. The invention remains pertinent as long as the lowest layer's power consumption (e.g., the preliminary detection layer 210) is substantially lower than the higher layers, especially the highest layer (e.g., the camera recording layer 230).

As mentioned earlier, the middle adjudication layer 220 may be optional. At the middle adjudication layer 220, the processor can use additional sensor modalities to further evaluate the vehicle event to determine whether it is a false positive or a genuine event. For example, the processor may evaluate images from the camera and/or audio from a microphone, and/or another motion or presence detection technology such as ultra-wideband radar, alone or in conjunction with the sensor data 204 captured by one or more inertial sensors (e.g., accelerometers and gyroscopes). Other sensor data from other sensors such as pressure sensors, motion sensors, GPS sensor, etc., may also be used in the analysis. Based on this analysis, the processor can determine whether a detected vehicle event is a false positive or a true event. If the processor determines, at the middle adjudication layer 220, that the vehicle event is a genuine event, it can escalate further, which is represented as escalation 222 in FIG. 2. Conversely, if the processor determines that the event is a false positive, it may de-escalate, which is represented as de-escalation 214 in FIG. 2. The processor can trigger escalation to the middle adjudication layer 220 in response to each CFAR alarm generated by processor at the preliminary detection layer 210, and again after a wait period. The alarm and the wait period can bracket a period in time where an adversary could attempt to take advantage of the algorithm's re-adaptation to an increased noise level. As described in greater detail later on, some examples described herein can attempt to combat this kind of adversary by making the wait period of random length, so that the adversary cannot predict when the camera will capture a subsequent image for adjudication purposes at the middle adjudication layer 220.

In some examples, at the middle adjudication layer 220, the processor can use contrast-enhanced camera images to reduce impact of lighting changes, simple image differencing to detect significant changes in the image, and learned locations of windows to reduce reaction to changes outside the vehicle. A classifier (not shown) in the middle adjudication layer 220 can take multiple still frames and account for higher weight on changes to the interior of the vehicle vs. the exterior of the vehicle view through windows, identification of broken glass or cracks in window areas, and face or person recognition (e.g., a face looking in through a window). Using these techniques, at the middle adjudication layer 220, the processor may be able to more accurately determine whether a detected vehicle event is a genuine event or a false positive.

Although the middle adjudication layer 220 is not required by the system, the processor operating at the middle adjudication layer 220 provides the advantage that the preliminary detection layer 210 can be even more aggressive (e.g., it can run at high recall even if it means many more false positives) because the middle adjudication layer 220 can reject false alarms with relatively low energy consumption. The middle adjudication layer 220 thus acts as an adjudicator and suppresses the majority of flagged vehicle events, triggering (e.g., escalating) the camera recording layer 230 (which can be the highest layer) for recording and detailed analysis only when it is highly likely to be a genuine event. If the vehicle event is not a genuine event, then the processor de-escalates the incident detection system 100. Thus, at the middle adjudication layer 220, the processor reduces latency and false positives by operating in a "middle tier power domain" which conditionally uses more energy to quickly adjudicate false positives.

As mentioned above and described in more detail below, the incident detection system 100 can employ randomization techniques to prevent an adversary from learning a set deterministic patterns of operation of the system. With randomization, parameters of the system can be randomized and rendered difficult to predict. For example, at the middle adjudication layer 220, the processor can randomize the wait period between successive adjudications after an alarm, making it hard to predict when the system will capture sensor data for a subsequent adjudication. As a result, the adversary will not know for certain when it is "safe" to attack the vehicle. In terms of energy consumption, the energy costs are determined by the mean of the parameter distribution.

The amount of sensor data (e.g., images or recorded video) captured per adjudication and the number of successive adjudications following an initial event detection would determine the energy cost.

In systems that do not include the middle adjudication layer 220, the incident detection system 100 can periodically or intermittently wake up the camera (e.g., camera 120) to record and analyze video clips. The camera can operate in standby mode when not triggered by the incident detection system 100. Once triggered, the camera can begin recording immediately. Since the camera is operating in standby mode when the system does not detect a vehicle event, battery consumption is reduced. In some examples, once awoken, the camera may record for a longer period of time, such as 2 minutes. Alternatively, the camera may record for a period of time corresponding to a threshold decay parameter. The threshold decay parameter can generally refer to a time period for which the trigger threshold is exceeded. For example, an anomalous vehicle event, such a vandal rocking the vehicle, may trigger the incident detection system 100 to wake up the camera from its standby mode to an active mode. The camera may then record the environment of the unoccupied vehicle for the duration of time that the vehicle is rocked. As the vehicle rocking dissipates, the threshold parameter decays back down to a level corresponding to the ambient environment noise. As the threshold parameter decays, the camera continues recording. This makes incident detection system 100 less sensitive to a series of false alarms but ensures that the camera captures a clip covering the whole threshold decay time. A clip covering the threshold decay time overcomes the risk of an adversary triggering a continuous false alarm signal to cover a real alarm event. With respect to the randomization techniques described above, if there is no middle adjudication layer 220, then the video clip can be captured for a randomized period of time that optionally has a minimum and maximum bound.

There is a trade-off between the precision at the preliminary detection layer 210 and energy consumption of the entire system. For example, if precision is low, the higher layers process data too often and drain the vehicle's battery. Conversely, if the precision is too high, it comes at the expense of lower recall, meaning that genuine vehicle events will not be flagged by the processor at the preliminary detection layer 210 for further analysis.

FIG. 3 is a block diagram illustrating an example of a system for implementing the preliminary detection layer 210, according to some aspects of the present disclosure. The system can include a processor 132, which can be always on as long as there is sufficient battery charge available. The processor 132 can receive a signal indicating presence of direct current input 310 as a power supply to the system for operation and recharging the battery. The processor 132 can receive a battery state of charge (SoC) value 312 usable to determine the remaining charge in the battery. The processor 132 can also receive sensor data 204 from one or more sensors. At the preliminary detection layer 210, the sensor data 204 received by the processor 132 may be inertial sensor data from one or more inertial sensors, but at higher levels, the sensor data 204 may include images or recordings from a camera and/or audio data from a microphone.

As shown, the processor 132 can include an adaptive algorithm 324, an incident event detection algorithm 322, and CFAR algorithm 326. The incident event detection algorithm 322 can indicate, based on sensor data 204, that there has been a vehicle event experienced by the unoccupied vehicle. Adaptive algorithm 324 can generate a trigger threshold, which can dynamically change based on various environment factors and other factors, such as the current state of charge of the system battery, and whether or not the system is powered from a direct current input. If the vehicle event corresponding to sensor data 204 exceeds the trigger threshold, then the CFAR algorithm 326 implemented by the processor 132 can escalate the vehicle event to middle adjudication layer 220 or the camera recording layer 230, depending on the implementation.

A fundamental challenge solved by the present disclosure is to adapt the trigger threshold of a vehicle event based on various environmental factors, which can help account for varying noise levels of the environment in which the vehicle is located. In this context, noise may refer to background pressure, motion, sound, and/or other environmental characteristics due to external factors other than a vehicle event. Some examples can automatically and dynamically adapt the trigger threshold for a potential vehicle event based on one or more of those environmental factors. In this way, the trigger threshold may be referred to as an adaptive trigger threshold that adjusts based on environmental features associated with an environment of the unoccupied vehicle. The adaptive trigger threshold is adjusted based on the environmental features, which can be learned from one or more sources (e.g., rather than the device having explicit knowledge of the environment). For instance, the environmental features may be determined based on the sensor data 204, as described in more detail below. Additionally or alternatively, the environmental features may be determined based on user input, where a user provides one or more of the environmental features. Additionally or alternatively, the environmental features may be determined based on contextual data. The contextual data can be associated with the geographical location of the vehicle and include, for example, map data, weather data (e.g., raining, snowing, sunny, temperature, wind speed and direction, humidity, etc.), whether the vehicle is parked in a garage or on a street, or any combination of these. This contextual data can be obtained from one or more external sources, such as a weather service, a map service, etc.

If a potential vehicle event exceeds the trigger threshold, the processor 132 can escalate to a higher layer of analysis. A higher layer can either be middle adjudication layer 220 or camera recording layer 230. Once a higher layer is activated by the processor 132, a small amount of imagery can be captured for further analysis in the middle adjudication layer 220, or video for a more extended amount of time to be recorded for analysis in the camera recording layer 230.

To determine the adaptive trigger threshold, the processor 132 can receive samples from sensor data 204 received from at least one inertial sensor from sensor data block 110, such as accelerometer 112, gyroscope 114, motion device 116, or any combination of these. According to one particular example where sensor data 204 is received from accelerometer 112, accelerometer 112 may be a 3-axis accelerometer, which provides data in an arbitrary frame of reference. When the vehicle and the 3-axis accelerometer are fully at rest, all accelerometer samples are estimates of the earth's gravity. Sensor data from other types of inertial sensors, such as a 3-axis gyroscope, and/or other types of sensors, such as a pressure sensor, may additionally or alternatively be used. One of ordinary skill in the art would recognize many variations, modifications, and alternatives.

The processor 132 can implement a method that involves filtering sensor data 204 (e.g., data from a 3-axis accelerometer) into data samples, x (a vector with three numbers representing the three axes of the accelerometer), using an infinite impulse response (IIR) filter to estimate a short-term mean. The estimate short-term mean can be updated using the following formula:

$$\underline{x} \leftarrow \underline{x} + \frac{(x - \underline{x})}{f_m}$$

The IIR filter may be a standard exponentially weighted moving average (EWMA), where $f_m$ (>= 1) is a parameter that controls the gain of the IIR filter.

The method can further include computing the zero-mean sample variance. The zero-mean sample variance can be expressed by the following formula:

$$v = \sigma^2 = \left| x - \underline{x} \right|^2$$

The method can further include filtering the sample variances (e.g., statistical variances), v, using an IIR filter to estimate a short-term variance of the signal. The short-term variance of the signal can be updated by the following formula:

$$\underline{v} \leftarrow \underline{v} + \frac{(v - \underline{v})}{f_m}$$

The short-term variance of the signal represents an estimate of the short-term noise. The short-term

noise value, $\underline{v}$, can then be used to estimate a standard deviation, $\sigma$, which can be expressed by the following formula:

$$\sigma = \sqrt{\underline{v}}$$

The method can further include computing a very short-term trailing average of $k$ sample variances. The very short-term trailing average can be expressed by the following formula:

$$\hat{v} = \sum_{i=1}^{k} \frac{v_i}{k}$$

The very short-term trailing average is a live signal. If the preliminary detection layer 210 returns TRUE, it can trigger an alarm to middle adjudication layer 220 or to camera recording layer 230 whenever $\hat{v} > T^2$, where $T$ is a threshold. As noted above, the trigger threshold $T$ is not static, but is adaptive and can be updated in each step. Updating the trigger threshold in each step can be expressed by the following formulas:

$$T \leftarrow max(T, f_v \sqrt{\hat{v}} + f_s \sigma, f_n \sigma)$$

$$T \leftarrow T - \frac{(T - f_n \sigma)}{f_d}$$

The dynamic nature of the trigger threshold ensures a healthy balance between high recall and an acceptable rate of triggers to the higher layers because it ensures that the new threshold decays toward the appropriate multiple of the current standard deviation when the noise floor (e.g., ambient vibration) of the environment changes. For example, if the vehicle is in a noisier environment, $T$ rises; otherwise, $T$ falls.

The operational behavior of this method depends on several parameters. These parameters can be tuned using offline optimization across a trace data set, tuned using machine learning over a training data set, or set using online machine learning. The several parameters include: *fm,* which is the IIR filter parameter that determines how quickly the noise estimate adapts to changing conditions; $k$, which is the number of successive sample variances that are averaged into the signal estimate; $f_v$ and $f_s$, which are scale factors used to raise the threshold upon triggering, if desired, else set to 0; $f_n$, which is the number of standard deviations to consider the signal anomalous; and $f_d$, which is the IIR filter parameter that determines how quickly $T$ decays back to $f_n\sigma$. By selecting $f_m$ and $f_d$, $T$ has an asymmetric profile, where the onset is determined by $f_m$ and the threshold decay is determined by $f_d$.

The selection of the onset parameter determines the rate of adaptation of the noise estimate to the short-term noise environment. Changes to the noise environment that rise slower than the adaptation rate will never trigger an alarm and will instead raise the threshold for triggering an alarm. A change in noise environment more abrupt than the allowed adaptation rate will trigger an alarm, but once the algorithm adapts to the new elevated noise level, new alarms will not be triggered. The selection of the threshold decay parameter determines the time period over which the threshold reverts back to the short-term noise estimate. This avoids false alarms in a bursty noise environment, by effectively increasing the threshold required to alarm, based on recent noise bursts.

In some examples, the adaptive trigger threshold may be set using a machine learning model where the machine learning model adjusts one or more parameters based on received sensor data. More specifically, the machine learning model, which may be a transformer, a neural network (e.g., FNN, CNN, RNN, LSTM, etc.), a decision tree, a random forest, a support vector machine (SVM), or an ensemble model, among other possibilities, may undergo a training process using labeled training data to train the machine learning model to select the parameters for setting the adaptive trigger threshold. The labeled training data may be extracted from additional sensor data received from a plurality of sensors positioned in a plurality of environment locations, and the labeled training data may be labeled as being indicative, or not indicative, of vehicle events. Using the labeled training data, the machine learning model can learn the types of patterns of sensor data that are indicative of vehicle events and fine tune the parameters of the adaptive trigger threshold such that the device employing the fine-tuned adaptive trigger threshold achieves a high degree of recall for vehicle events.

A benefit of the method described herein is that setting the above parameters to different values enables the method to detect specific kinds of vehicle events. For example, one set of values can be used to detect break-ins, another set of values can be used to detect a tree limb falling on a vehicle, and yet another set of values can be used to detect a driver or passenger opening the door and sitting in the car. Thus, the adaptive trigger threshold can be selectively tuned to different sets of values to detect different types of vehicle events. The adaptive trigger threshold algorithm is also a simple and economical solution that can be used with an embedded system that has relatively constrained computational resources, such as a microcontroller. Most current approaches to detecting vehicle events use more complex machine learning models, which require substantial amounts of compute power and labeled training data. By contrast, the proposed method is simple, and the machine learning, if it is used at all, is for setting and tuning suitable parameter values for the adaptive trigger threshold. Such a machine-learning model can be smaller, faster to execute, and consume less memory than other kind of machine-learning models that have more significant responsibilities, such as detecting the vehicle events, than just selecting a set of parameter values for an adaptive trigger threshold algorithm.

By way of example, and in reference to the preliminary detection layer, frequencies of interest are relatively low (e.g., around 1 to a few Hz) to capture door openings, window openings, tree limb falling, etc. The aim of the preliminary detection layer may be to capture any movement of the unoccupied vehicle. In some examples, sensor data can come in at higher frequency (e.g., 20 Hz or more) and the system filters can be set to a suitably lower cutoff and a sample frequency. At a lower sampling rate, an EWMA can be used to estimate a mean vector with a suitable convergence time. Then the variance is computed as (x-m) (x-m) and EWMA is used to estimate the variance. Then the root mean square (RMS) average of a sample variance is computed, and the middle adjudication layer is triggered if over a threshold, $T$.

As another example, at a lower sampling frequency, the standard deviation is computed by taking the square root of the variance, resetting the trigger threshold to $T = \max(T, f_n \sigma)$. Then, an EWMA can be applied with a longer convergence time to decay $T$ down to $f_n \sigma$.

While the noise estimation and adaptive algorithms described above are effective ways to detect stand-out events and to control false alarm rates, it may also be desirable to give additional consideration to defeating an adversary who has an understanding of these adaptive algorithms. One way to address this problem is through timed re-check of false alarm events. Timed re-check refers to checking a false alarm first when the alarm is originally triggered, and then again, periodically thereafter for as long as the trigger threshold is elevated over the noise estimate. The period of a re-check would be chosen based on the approximate amount of time required for the adversary to perform a significant action, e.g., the time required to enter into the car and steal something. For some examples that exclude the middle adjudication layer, the system may simply capture a clip of video with a length on the order of the length of time required for the trigger threshold to decay back to the noise estimate.

Another way to address the problem of an adversary who has access to an understanding of these algorithms is through randomization. Randomization refers to increasing the risk incurred by an adversary by making it impossible for them to predict the timing parameters of the algorithm through randomization. For example, the timing of re-checks, the duration of captured video after an alarm, and the threshold decay rate can be randomized to prevent a deterministic method of avoiding detection.

Another way to address the problem of an adversary who has access to an understanding of these algorithms is through checking high noise levels. For example, if the short-term noise estimate and threshold rises above the level of typical events to be detected and alarmed, randomized periodic alarms can be generated to stochastically detect intrusions.

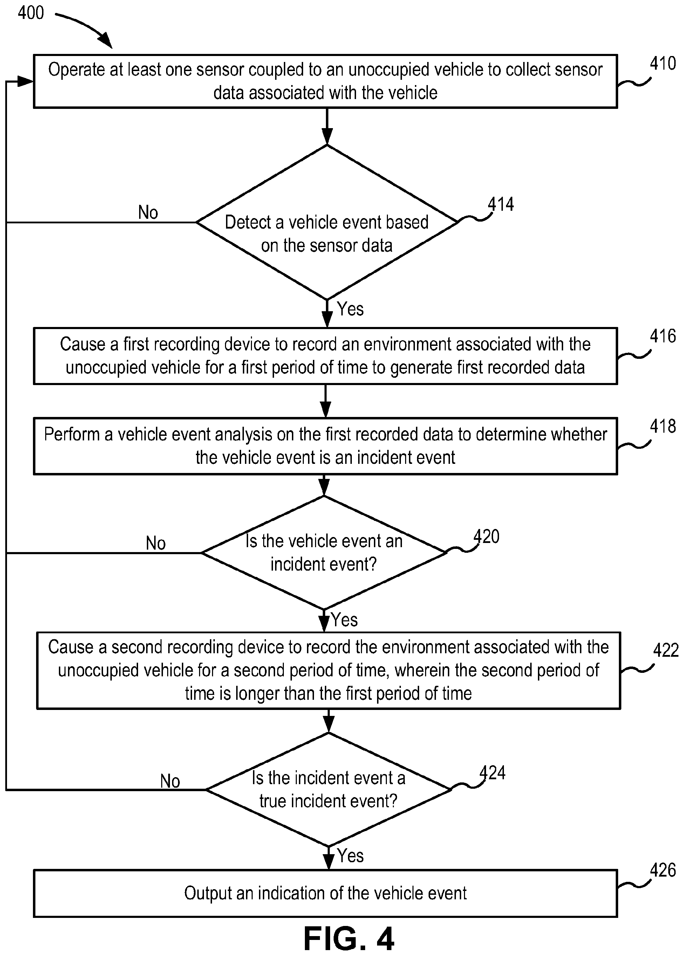

FIG. 4 is a flow chart of an example process 400 for incident event detection, according to some aspects of the present disclosure. One or more of the actions and decisions illustrated in process 400 may be implemented as one or more software applications executing on electronic device 102 as described above. Additionally or alternatively, the actions and decisions illustrated in process 400 may be distributed between multiple electronic devices.

As further described herein, incident event detection may involve one or more actions and decisions intended to adequately and accurately respond to physical interactions with an unoccupied vehicle while minimizing and optimizing energy consumption. As illustrated, process 400 may begin at block 410 in which at least one sensor coupled to an unoccupied vehicle is operated to collect sensor data associated with the unoccupied vehicle. For example, one or more processors executing on electronic device 102 may collect measurements from one or more sensors. At block 414, a vehicle event may be detected based on the sensor data, for example by analyzing the sensor data. A vehicle event may be any physical interaction with an unoccupied vehicle. For example, a vehicle event may include a vehicle break-in, theft, vandalism, damage from natural causes such as a falling tree branch or hail, ambient vibrations from the environment, heavy rain, and the like. To detect the vehicle event, in some examples the sensor data can be compared to a trigger threshold.

If the sensor data meets or exceeds the trigger threshold, the process 400 proceeds to block 416, where a first recording device is initiated. The recording device may be a camera, a microphone, or the like to record video, audio, etc. The recording device can be configured to record an environment associated with (e.g., internal and/or external to) the unoccupied vehicle for a first period of time to generate first recorded data. If the trigger threshold is not exceeded, then process 400 returns to block 410 and repeats.

At block 418, the first recorded data is analyzed to determine whether the vehicle event is an incident event (e.g., a genuine event) or a false positive. Other data may also be considered to make this determination. For example, the recorded data may be analyzed in conjunction with inertial data gathered at block 410 to make this determination. In some examples, this determination can be conceptually made at the middle adjudication layer of the three-layer hierarchy described above. Determining that the vehicle event is a genuine event may result in escalation to a higher layer to protect the unoccupied vehicle. To determine whether the vehicle event is an incident event or a false position, a vehicle event algorithm may be applied to the first recorded data.

The vehicle event algorithm employed at block 418 may involve an algorithm to process and evaluate the first recorded data. In some examples, the first recorded data may be individually captured images and/or a few second of video data, and the vehicle event algorithm may perform processing on the images and/or video data. In more detail, the vehicle event algorithm may utilize object detection models, such as those based on convolutional neural networks (CNNs) (e.g., region-based CNNs, fast region-based CNNs, etc.) or other suitable types of detection models for audio and/or video processing, to identify and classify objects within each frame (e.g., in the case where the first recorded data is video data) and/or identify and classify audio features for a specific timing window (e.g., in the case where the first recorded data is audio data). Once the objects and/or audio signals of interest are detected, the vehicle event algorithm may transform the detected objects and/or signals into feature vectors (e.g., numerical representations) associated with their attributes such as size, shape, color, movement pattern, spatial relationships, etc. and compare the feature vectors against predefined normal behavior patterns or datasets. The vehicle event algorithm may detect deviations from the predefined norms and flag the detected deviations as potential anomalies. The vehicle event algorithm may also refine its analysis over time using machine learning techniques enabling it to improve its understanding and accuracy in identifying incident events.

At block 420, if the vehicle event analysis indicates that the vehicle event is an incident event (e.g., a genuine event), then process 400 moves to block 422, where a second recording device is initiated to record an environment associated with the unoccupied vehicle for a second period of time to generate second recorded data. In some examples, the second period of time may be longer in duration than the first period of time. In some examples the durations of time may be randomized. The second recording device may be the same as or different from the first recording device that is initiated at block 416. For instance, in some examples, the first recording device may be a low-powered camera with a smaller memory capacity that is configured to capture low-resolution video for a short period of time and the second recording device can be a higher-powered camera with a larger memory capacity that is configured to capture high-resolution video for a longer period of time. Given that the first recording device will likely be initiated more often (e.g., by virtue of the at least one sensor having higher recall parameters), utilization of a low-power camera is advantageous especially in systems where electronic power is inherently limited (e.g., in parked vehicles utilizing the vehicle battery as a power supply). Then, if the vehicle event is determined to be an incident event, the high-powered camera can record high resolution data for a longer period of time.

After generating the second recorded data at block 422, process 400 proceeds to block 424 to determine if the incident event is a true incident event. Block 424 may utilize a similar (e.g., the same) vehicle event algorithm, or a different vehicle event algorithm, than was used in block 420 to analyze the second recorded data associated with the incident event. In some examples, the vehicle event algorithm may perform processing on a few seconds of video data to a few minutes of video data corresponding to the second recorded data. As described above, the vehicle event algorithm can include object detection models that may identify and classify objects and/or audio signals of interest within the second recorded data. The detected objects and/or audio signals may then be transformed into feature vectors associated with their attributes such as size, shape, color, movement pattern, spatial relationships, etc. The vehicle event algorithm can then compare the feature vectors against predefined normal behavior patterns or datasets to make a determination as to whether the incident event is a true incident event. In addition to the second recorded data, the vehicle event algorithm may consider other data to make this determination. For example, the second recorded data may be analyzed in conjunction with inertial data gathered at block 410 to make this determination. In some examples, this determination can be conceptually made at the upper layer of the three-layer hierarchy described above. In some examples involving this additional verification, if the incident event is further verified to be a true incident event at this stage, the process may proceed to block 426. Otherwise, if the classification by the vehicle event algorithm indicates that the vehicle event is likely a false positive, the process may return to block 410 and repeat.

At block 426, an indication of the vehicle event is output. The output may include at least a portion of the recorded data obtained at block 422. The output can be transmitted to a computing device of a user (e.g., the user's mobile phone or smart watch), a server that is affiliated with an entity other than the user (e.g., an insurance provider), or to another computing device.

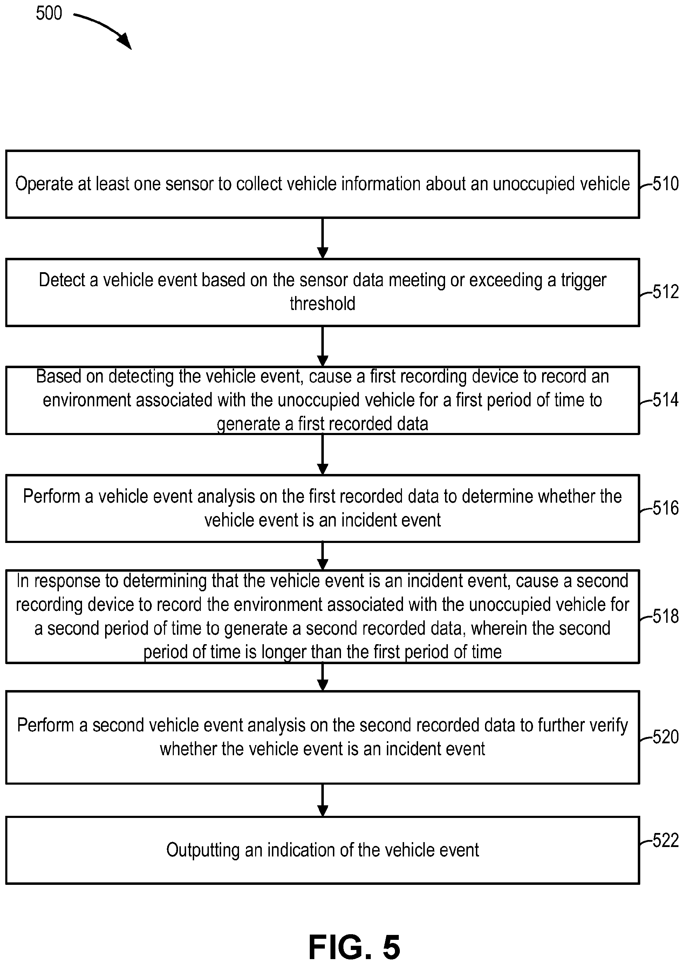

FIG. 5 illustrates an example of a process 500 for automatically detecting interactions with an unoccupied vehicle using a low-power system, according to some aspects of the present disclosure. One or more of the actions and decisions illustrated in process 500 may be implemented as one or more software applications executing on electronic device 102 as described above. Additionally or alternatively, the actions and decisions illustrated in process 500 may be distributed between multiple electronic devices.

As further described herein, incident event detection may involve one or more steps intended to adequately and accurately respond to interactions with an unoccupied vehicle while minimizing and optimizing energy consumption. As illustrated, the method may begin at block 510 in which at least one sensor coupled to an unoccupied vehicle is operated to collect sensor data about the unoccupied vehicle. The sensor data may include measurements from one or more sensors. The measurements may characterize inertial events, such as impacts or movements, associated with the vehicle. At block 512, the electronic device 102 detects a possible vehicle event based on based on the sensor data (e.g., an amplitude of a sensor measurement) meeting or exceeding a trigger threshold. The trigger threshold may be an adaptive trigger threshold, which is adjustable based on one or more environmental factors associated with the vehicle. A vehicle event may be any physical interaction with an unoccupied vehicle. For example, a vehicle event may include a vehicle break-in, theft, vandalism, damage from natural causes such as a falling tree branch or hail, ambient vibrations from the environment, heavy rain, and the like.

At block 514, based on detecting the vehicle event, the electronic device 102 causes a first recording device to record an environment associated with the unoccupied vehicle for a first period of time to generate a first recorded data. In cases where the vehicle information meets or exceeds the trigger threshold, a first recording device is initiated to record an environment of the unoccupied vehicle for a first period of time to generate recorded data. The recording device may be a camera, a microphone, or the like to record video, audio, etc.

At block 516, the electronic device 102 performs a first vehicle event analysis on the first recorded data to determine whether the vehicle event is an incident event. Other data may also be considered to make this determination. For example, the first recorded data may be analyzed in conjunction with inertial data and/or other sensor data gathered at block 510 to make this determination. In some examples, this classification can be conceptually determined at the middle adjudication layer of the three-layer hierarchy described above. Determining that the vehicle event is a genuine event may result in escalation to a higher layer to protect the unoccupied vehicle. Determining whether the vehicle event is an incident event may be performed using the vehicle event algorithm described above with respect to FIG. 4.

At block 518, in response to determining that the vehicle event is an incident event, the electronic device 102 causes a second recording device to record the environment associated with the unoccupied vehicle for a second period of time to generate a second recorded data. In some examples, the second period of time may be longer in duration than the first period of time. In some examples, one or both periods of time may be randomized. In some examples, the second recording device can be the same as the first recording device. In other examples the second recording device may be different than the first recording device. For instance, the first recording device may be a low-powered camera and/or a low-powered microphone and the second recording device may be a higher-powered camera and/or a higher power microphone. Use of a higher-powered camera and/or higher-powered microphone enables the second recorded data to be of better resolution and/or higher fidelity thereby improving the accuracy and determination as to whether the vehicle event is a genuine incident event.

At block 520, the electronic device 102 performs a second vehicle event analysis on the second recorded data to further verify whether the vehicle event is an incident event. As described with respect to FIG. 4, a vehicle event algorithm utilizing object detection models may be utilized to make this determination. In addition, other data may be considered to make this determination. For example, the second recorded data may be analyzed in conjunction with sensor data (e.g., inertial data) gathered at block 510 and/or the first recorded data from block 514 to make this determination. In some examples, this classification can be conceptually determined at the upper layer of the three-layer hierarchy described above. The second vehicle event analysis may be the same as, or different from, the first vehicle event analysis.

At block 522, the electronic device 102 outputs an indication of the vehicle event. In some examples, the electronic device 102 can output the indication of the vehicle event in response to further verifying the incident event at block 520. The output can be provided to a user or to another computing device, server, or the like. For instance, the output can be wirelessly transmitted to a computing device (e.g., mobile phone, tablet, laptop computer, etc.) of the user to notify the user of the incident event. The output may include the first recorded data, the second recorded data, or both of these.

Some examples described herein can be combined with the features described in U.S. Provisional Patent Application No. 63/686,378, titled "VEHICLE INTRUSION DETECTION USING SENSOR FUSION," filed on August 23, 2024, the entirety of which is hereby incorporated by reference. For instance, the described techniques regarding fusing highfrequency data from an inertial sensor (e.g., an accelerometer) with low frequency data from a pressure sensor may be employed at the preliminary detection layer 210 or a higher layer to identify vehicle events. In addition, some examples described herein can also be combined with the features described in U.S. Patent No. 10,440,451, titled "SYSTEM AND METHOD FOR OBTAINING VEHICLE TELEMATICS DATA," issued on October 8, 2019, the entirety of which is hereby incorporated by reference. For instance, the described techniques regarding a sensor tag affixed to a vehicle for obtaining vehicle telematics data, such as by using an accelerometer to measure the acceleration of the sensor tag and thereby of the vehicle, may be employed at the preliminary detection layer 210 or a higher layer to identify vehicle events. Additionally, the described techniques regarding storing trip data including information about trips and acceleration data of the vehicle and transmitting the sensor tag's unique identifier and a sequence of time stamped acceleration data may be employed at the preliminary detection layer 210 or a higher layer to identify vehicle events.

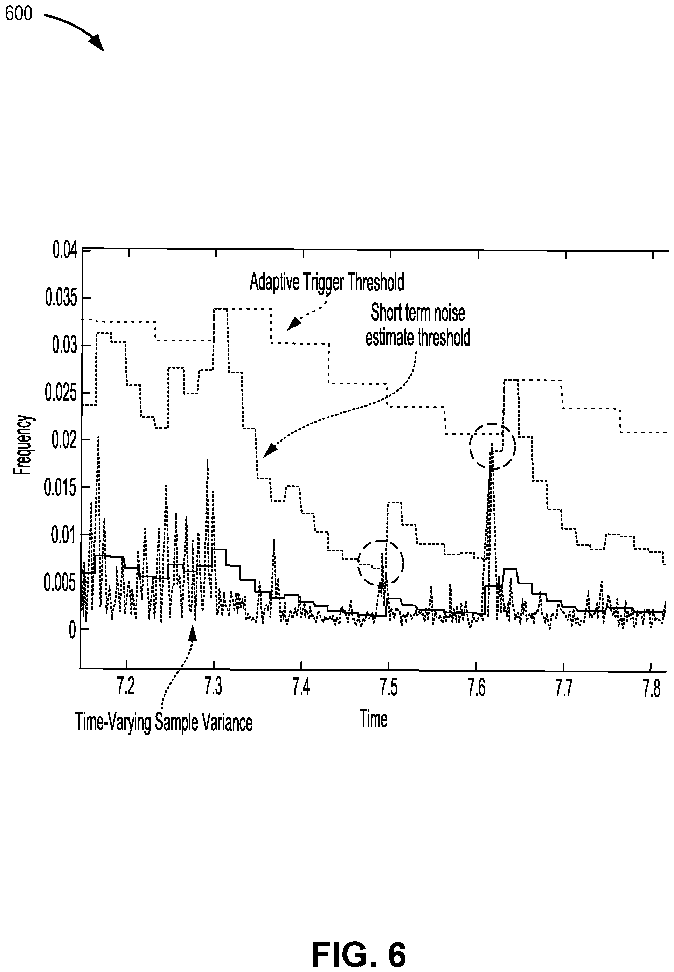

Turning now to FIG. 6, FIG. 6 illustrates a plot 600 depicting an example of a time-varying sample variance, a short-term noise estimate threshold, and an adaptive trigger threshold, according to some aspects of the present disclosure. As illustrated in FIG. 6, the threshold changes over time. The adaptive trigger threshold decays much slower than the time constant of the short-term noise estimate threshold. The green circles show how this algorithm avoided two false alarms. In other words, although the sample variance exceeded the short-term noise estimate threshold, it was ignored because it was below the slower decaying adaptive trigger threshold. The selection of these timing parameters can be tuned to take into account the characteristics of the events that should be captured, the capabilities of the adversary, and the desired rate of false alarms.

As further illustrated in FIG. 6, the adaptive trigger threshold rises based on short term changes in noise, but events that trigger more abrupt rises in variance will trigger an alarm. For example, minor impacts to the vehicle, and a person entering the vehicle, will have a characteristic onset rate, which should be higher than the rate of short-term noise adaptation. Additionally, after observing an event or a change in the noise level, the threshold decay rate determines the time over which similar kinds of events will be ignored. This limits the rate of alarms. To prevent an attack method by an adversary, false alarms can trigger heightened alertness (e.g., running the camera or periodic snapshots) on the order of the threshold decay time.

Specific details are given in the previous description to provide a thorough understanding of the examples. However, it will be understood by one of ordinary skill in the art that the examples may be practiced without these specific details. For example, circuits, systems, networks, processes, and other components may be shown as components in block diagram form in order not to obscure the examples in unnecessary detail. In other instances, well-known circuits, processes, algorithms, structures, and techniques may be shown without unnecessary detail in order to avoid obscuring the examples.

Also, it is noted that individual examples may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, micro-controllers, microprocessors, other electronic units designed to perform the functions described above, and/or combinations thereof.

Also, it is noted that the examples and/or examples may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

The examples and examples described herein are for illustrative purposes only. Various modifications or changes in light thereof will be apparent to persons skilled in the art. These are to be included within the spirit and purview of this application, and the scope of the appended claims, which follow.

The following numbered paragraphs set out preferred features and preferred combinations of features of the present invention:

1. A method comprising:

operating, by an electronic device, at least one sensor coupled to an unoccupied vehicle to collect sensor data associated with the unoccupied vehicle;

detecting, by the electronic device, a vehicle event based on the sensor data meeting or exceeding an adaptive trigger threshold that is determined based on one or more environmental features associated with an environment of the unoccupied vehicle;

based on detecting the vehicle event, recording, by the electronic device using a first recording device, the environment associated with the unoccupied vehicle for a first period of time to generate a first recorded data, wherein the at least one sensor is different from the first recording device; and

performing, by the electronic device, a vehicle event analysis on the first recorded data to determine whether the vehicle event is an incident event.

2. The method of para 1, wherein the vehicle event analysis is a first vehicle event analysis, and further comprising:

in response to determining that the vehicle event is the incident event, recording, using a second recording device, the environment associated with the unoccupied vehicle for a second period of time to generate a second recorded data, wherein the second period of time is longer than the first period of time;

performing, by the electronic device, a second vehicle event analysis on the second recorded data to verify whether the vehicle event is a true incident event; and

based on verifying that the vehicle event is a true incident event, outputting, by the electronic device, an indication of the vehicle event.

3. The method of para 2, wherein the first recording device and the second recording device are the same.

4. The method of para 1, further comprising:

adjusting the adaptive trigger threshold from a first value to a second value based on a change in at least one environment factor associated with the environment of the vehicle.

5. The method of para 1, wherein the adaptive trigger threshold is a function of a first statistical variance and a second statistical variance of the sensor data, where the first statistical variance is determined based on a subset of the sensor data collected during a first time window, and wherein the second statistical variance is determined based on a second subset of the sensor data collected during a second time window that is longer than the first time window.

6. The method of para 1, wherein the sensor data is provided as input to a machine learning model trained by analyzing additional sensor data received from a plurality of sensors positioned in a plurality of environment locations, and wherein one or more parameters of the adaptive trigger threshold are selected using the machine learning model.

7. The method of para 1, wherein a duration of the first period of time corresponds to a duration of time for which the adaptive trigger threshold is exceeded.

8. The method of para 1, further comprising:

operating the at least one sensor to collect additional sensor data associated with the unoccupied vehicle;

detecting a second vehicle event based on the additional sensor data meeting or exceeding the adaptive trigger threshold;

based on detecting the second vehicle event, causing the first recording device to record the environment associated with the unoccupied vehicle for a third period of time to generate a third recorded data;

performing the vehicle event analysis on the third recorded data to determine whether the second vehicle event is an incident event; and

in response to determining that the vehicle event is not an incident event:

waiting for a delay period; and
based on detecting a conclusion of the delay period, causing the first recording device to record the environment associated with the unoccupied vehicle for a fourth period of time to generate a fourth recorded data; and
performing the vehicle event analysis on the fourth recorded data to determine whether the second vehicle event is an incident event.

9. The method of para 8, wherein the delay period is randomized.

10. The method of para 1, wherein the at least one sensor comprises at least one of an accelerometer, a gyroscope, a pressure sensor, or any combination thereof.

11. The method of para 1, further comprising determining the one or more environmental features based on contextual data receive from one or more external sources.

12. The method of para 1, further comprising determining the one or more environmental features based on the sensor data.

13. The method of para 1, further comprising determining the one or more environmental features based on a user input.

14. A system comprising:

at least one sensor;
a memory; and
a processor coupled to the memory and the at least one sensor, wherein the processor is configured to:

operate the at least one sensor coupled to an unoccupied vehicle to collect sensor data associated with the unoccupied vehicle;
detect a vehicle event based on the sensor data meeting or exceeding an adaptive trigger threshold that is determined based on one or more environmental features associated with an environment of the unoccupied vehicle;
based on detecting the vehicle event, cause a first recording device to record the environment associated with the unoccupied vehicle for a first period of time to generate a first recorded data, wherein the at least one sensor is different from the first recording device; and
perform a vehicle event analysis on the first recorded data to determine whether the vehicle event is an incident event.

15. The system of para 14, wherein the vehicle event analysis is a first vehicle event analysis, and wherein the processor is further configured to:

in response to determining that the vehicle event is the incident event, cause a second recording device to record the environment associated with the unoccupied vehicle for a second period of time to generate a second recorded data, wherein the second period of time is longer than the first period of time;
perform a second vehicle event analysis on the second recorded data to verify whether the vehicle event is a true incident event; and
based on verifying that the vehicle event is a true incident event, output an indication of the vehicle event.

16. The system of para 14, wherein the adaptive trigger threshold is a function of a first statistical variance and a second statistical variance of the sensor data, where the first statistical variance is determined based on a subset of the sensor data collected during a first time window, and wherein the second statistical variance is determined based on a second subset of the sensor data collected during a second time window that is longer than the first time window.

17. The system of para 14, wherein the sensor data is provided as input to a machine learning model trained by analyzing additional sensor data received from a plurality of sensors positioned in a plurality of environment locations, and wherein one or more parameters of the adaptive trigger threshold are selected using the machine learning model.

18. The system of para 14, wherein the processor is further configured to:

operate the at least one sensor to collect additional sensor data associated with the unoccupied vehicle;
detect a second vehicle event based on the additional sensor data meeting or exceeding the adaptive trigger threshold;
based on detecting the second vehicle event, cause the first recording device to record the environment associated with the unoccupied vehicle for a third period of time to generate a third recorded data;
perform the vehicle event analysis on the third recorded data to determine whether the second vehicle event is an incident event; and
in response to determining that the vehicle event is not an incident event:

> waiting for a delay period; and
> based on detecting a conclusion of the delay period, cause the first recording device to record the environment associated with the unoccupied vehicle for a fourth period of time to generate a fourth recorded data; and

> perform the vehicle event analysis on the fourth recorded data to determine whether the second vehicle event is an incident event.

19. The system of para 14, wherein the processor is further configured to:
determine the one or more environmental features based on contextual data receive from one or more external sources, based on the sensor data, based on a user input, or based on any combination thereof.

20. A non-transitory computer-readable medium embodying program code that, when executed by a processor, causes the processor to:

> operate at least one sensor coupled to an unoccupied vehicle to collect sensor data associated with the unoccupied vehicle;
> detect a vehicle event based on the sensor data meeting or exceeding an adaptive trigger threshold that is determined based on one or more environmental features associated with an environment of the unoccupied vehicle;
> based on detecting the vehicle event, cause a first recording device to record the environment associated with the unoccupied vehicle for a first period of time to generate a first recorded data, wherein the at least one sensor is different from the first recording device; and
> perform a vehicle event analysis on the first recorded data to determine whether the vehicle event is an incident event.

**Claims**

1. A method comprising:

> operating, by an electronic device, at least one sensor coupled to an unoccupied vehicle to collect sensor data associated with the unoccupied vehicle;
> detecting, by the electronic device, a vehicle event based on the sensor data meeting or exceeding an adaptive trigger threshold that is determined based on one or more environmental features associated with an environment of the unoccupied vehicle;
> based on detecting the vehicle event, recording,

> by the electronic device using a first recording device, the environment associated with the unoccupied vehicle for a first period of time to generate a first recorded data, wherein the at least one sensor is different from the first recording device; and
> performing, by the electronic device, a vehicle event analysis on the first recorded data to determine whether the vehicle event is an incident event.

2. The method of claim 1, wherein the vehicle event analysis is a first vehicle event analysis, and further comprising:

> in response to determining that the vehicle event is the incident event, recording, using a second recording device, the environment associated with the unoccupied vehicle for a second period of time to generate a second recorded data, wherein the second period of time is longer than the first period of time;
> performing, by the electronic device, a second vehicle event analysis on the second recorded data to verify whether the vehicle event is a true incident event; and
> based on verifying that the vehicle event is a true incident event, outputting, by the electronic device, an indication of the vehicle event.

3. The method of claim 2, wherein a duration of the first period of time corresponds to a duration of time for which the adaptive trigger threshold is exceeded, and wherein the first recording device and the second recording device are the same.

4. The method of claim 1, further comprising:

> adjusting the adaptive trigger threshold from a first value to a second value based on a change in at least one environment factor associated with the environment of the vehicle.

5. The method of claim 1, wherein the adaptive trigger threshold is a function of a first statistical variance and a second statistical variance of the sensor data, where the first statistical variance is determined based on a subset of the sensor data collected during a first time window, and wherein the second statistical variance is determined based on a second subset of the sensor data collected during a second time window that is longer than the first time window.

6. The method of claim 1, wherein the sensor data is provided as input to a machine learning model trained by analyzing additional sensor data received from a plurality of sensors positioned in a plurality of environment locations, and wherein one or more parameters of the adaptive trigger threshold are selected using the machine learning model.

7. The method of claim 1, further comprising:

operating the at least one sensor to collect additional sensor data associated with the unoccupied vehicle;
detecting a second vehicle event based on the additional sensor data meeting or exceeding the adaptive trigger threshold;
based on detecting the second vehicle event, causing the first recording device to record the environment associated with the unoccupied vehicle for a third period of time to generate a third recorded data;
performing the vehicle event analysis on the third recorded data to determine whether the second vehicle event is an incident event; and
in response to determining that the vehicle event is not an incident event:

waiting for a delay period; and
based on detecting a conclusion of the delay period, causing the first recording device to record the environment associated with the unoccupied vehicle for a fourth period of time to generate a fourth recorded data; and

performing the vehicle event analysis on the fourth recorded data to determine whether the second vehicle event is an incident event.

8. The method of claim 7, wherein the at least one sensor comprises at least one of an accelerometer, a gyroscope, a pressure sensor, or any combination thereof, and wherein the delay period is randomized.

9. The method of claim 1, further comprising determining the one or more environmental features based on contextual data receive from one or more external sources, based on the sensor data, based on a user input, or based on any combination thereof.

10. A system comprising:

at least one sensor;
a memory; and
a processor coupled to the memory and the at least one sensor, wherein the processor is configured to:

operate the at least one sensor coupled to an unoccupied vehicle to collect sensor data associated with the unoccupied vehicle;
detect a vehicle event based on the sensor data meeting or exceeding an adaptive trigger threshold that is determined based on one or more environmental features associated with an environment of the unoccupied vehicle;
based on detecting the vehicle event, cause a first recording device to record the environment associated with the unoccupied vehicle for a first period of time to generate a first recorded data, wherein the at least one sensor is different from the first recording device; and
perform a vehicle event analysis on the first recorded data to determine whether the vehicle event is an incident event.

11. The system of claim 10, wherein the vehicle event analysis is a first vehicle event analysis, and wherein the processor is further configured to:

in response to determining that the vehicle event is the incident event, cause a second recording device to record the environment associated with the unoccupied vehicle for a second period of time to generate a second recorded data, wherein the second period of time is longer than the first period of time;
perform a second vehicle event analysis on the second recorded data to verify whether the vehicle event is a true incident event; and
based on verifying that the vehicle event is a true incident event, output an indication of the vehicle event.

12. The system of claim 10, wherein the adaptive trigger threshold is a function of a first statistical variance and a second statistical variance of the sensor data, where the first statistical variance is determined based on a subset of the sensor data collected during a first time window, and wherein the second statistical variance is determined based on a second subset of the sensor data collected during a second time window that is longer than the first time window.

13. The system of claim 10, wherein the sensor data is provided as input to a machine learning model trained by analyzing additional sensor data received from a plurality of sensors positioned in a plurality of environment locations, and wherein one or more parameters of the adaptive trigger threshold are selected using the machine learning model.

14. The system of claim 10, wherein the processor is further configured to:

operate the at least one sensor to collect additional sensor data associated with the unoccupied vehicle;
detect a second vehicle event based on the additional sensor data meeting or exceeding the adaptive trigger threshold;

based on detecting the second vehicle event, cause the first recording device to record the environment associated with the unoccupied vehicle for a third period of time to generate a third recorded data;

perform the vehicle event analysis on the third recorded data to determine whether the second vehicle event is an incident event; and

in response to determining that the vehicle event is not an incident event:

waiting for a delay period; and
based on detecting a conclusion of the delay period, cause the first recording device to record the environment associated with the unoccupied vehicle for a fourth period of time to generate a fourth recorded data; and

perform the vehicle event analysis on the fourth recorded data to determine whether the second vehicle event is an incident event.

15. The system of claim 10, wherein the processor is further configured to:

determine the one or more environmental features based on contextual data receive from one or more external sources, based on the sensor data, based on a user input, or based on any combination thereof.

FIG. 1

**FIG. 2**

Direct Current Input 310

Battery State of Charge (SoC) Value 312

Sensor Data 204

Processor 132

Incident Event Detection Algorithm 322

Adaptive Algorithm 324

Constant False Alarm Rate Algorithm 326

# FIG. 3

400

Operate at least one sensor coupled to an unoccupied vehicle to collect sensor data associated with the vehicle — 410

No ← Detect a vehicle event based on the sensor data — 414

Yes

Cause a first recording device to record an environment associated with the unoccupied vehicle for a first period of time to generate first recorded data — 416

Perform a vehicle event analysis on the first recorded data to determine whether the vehicle event is an incident event — 418

No ← Is the vehicle event an incident event? — 420

Yes

Cause a second recording device to record the environment associated with the unoccupied vehicle for a second period of time, wherein the second period of time is longer than the first period of time — 422

No ← Is the incident event a true incident event? — 424

Yes

Output an indication of the vehicle event — 426

# FIG. 4

500

| Operate at least one sensor to collect vehicle information about an unoccupied vehicle | 510 |

↓

| Detect a vehicle event based on the sensor data meeting or exceeding a trigger threshold | 512 |

↓

| Based on detecting the vehicle event, cause a first recording device to record an environment associated with the unoccupied vehicle for a first period of time to generate a first recorded data | 514 |

↓

| Perform a vehicle event analysis on the first recorded data to determine whether the vehicle event is an incident event | 516 |

↓

| In response to determining that the vehicle event is an incident event, cause a second recording device to record the environment associated with the unoccupied vehicle for a second period of time to generate a second recorded data, wherein the second period of time is longer than the first period of time | 518 |

↓

| Perform a second vehicle event analysis on the second recorded data to further verify whether the vehicle event is an incident event | 520 |

↓

| Outputting an indication of the vehicle event | 522 |

# FIG. 5

600

Adaptive Trigger Threshold

Short term noise
estimate threshold

Frequency

Time-Varying Sample Variance

Time

**FIG. 6**

Europäisches
Patentamt

European
Patent Office

Office européen
des brevets

## EUROPEAN SEARCH REPORT

**Application Number**

EP 25 15 6009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/232963 A1 (PAL JAYANTA [US] ET AL) 17 August 2017 (2017-08-17) | 1,4,6,9, 10,13,15 | INV. B60R25/30 |
| Y | * claims 1-20 * <br> * paragraph [0030] - paragraph [0113] * | 1-15 | G07C5/08 |
| Y | US 2016/280131 A1 (CARSON JR CHRISTOPHER WARREN [US]) 29 September 2016 (2016-09-29) <br> * claims 1-20 * <br> * figure 5 * <br> * paragraph [0006] - paragraph [0007] * <br> * paragraph [0041] - paragraph [0059] * | 1-15 | ADD. B60R25/32 B60R25/34 |
| Y | US 2023/386268 A1 (SCARBROUGH ALYSSA [US] ET AL) 30 November 2023 (2023-11-30) <br> * claims 1-25 * <br> * figures 1A-2B * <br> * paragraph [0011] - paragraph [0051] * | 1,4-10, 12-15 | |
| Y | US 2020/274997 A1 (ELVIRA DAVID [FR] ET AL) 27 August 2020 (2020-08-27) <br> * claims 1-5 * <br> * paragraph [0177] - paragraph [0182] * | 5,12 | **TECHNICAL FIELDS SEARCHED (IPC)** <br> B60R <br> G07C |

The present search report has been drawn up for all claims

| Place of search | Date of completion of the search | Examiner |
|---|---|---|
| The Hague | 3 June 2025 | Hniene, Badr |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 6009

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| US 2017232963 A1 | 17-08-2017 | US | 2017053461 A1 | 23-02-2017 |
| | | US | 2017221283 A1 | 03-08-2017 |
| | | US | 2017232963 A1 | 17-08-2017 |
| | | US | 2018033220 A1 | 01-02-2018 |
| | | US | 2019202448 A1 | 04-07-2019 |
| | | US | 2021044928 A1 | 11-02-2021 |
| | | US | 2022286811 A1 | 08-09-2022 |
| US 2016280131 A1 | 29-09-2016 | US | 2016280131 A1 | 29-09-2016 |
| | | WO | 2016160596 A2 | 06-10-2016 |
| US 2023386268 A1 | 30-11-2023 | NONE | | |
| US 2020274997 A1 | 27-08-2020 | CN | 109154435 A | 04-01-2019 |
| | | EP | 3400405 A1 | 14-11-2018 |
| | | ES | 2992859 T3 | 18-12-2024 |
| | | FR | 3046519 A1 | 07-07-2017 |
| | | KR | 20180100406 A | 10-09-2018 |
| | | US | 2020274997 A1 | 27-08-2020 |
| | | WO | 2017118647 A1 | 13-07-2017 |

EPO FORM P0459

For more details about this annex : see Official Journal of the European Patent Office, No. 12/82

**REFERENCES CITED IN THE DESCRIPTION**

**Patent documents cited in the description**

- US 63549958
- US 63686378

- US 10440451 B